# EUROPÄISCHE PATENTSCHRIFT

(11) **EP 4 214 537 B1**
(45) Veröffentlichungstag und Bekanntmachung des Hinweises auf die Patenterteilung: **25.02.2026**
(21) Anmeldenummer: 21749206.5
(22) Anmeldetag: 26.07.2021
(51) Int. Cl.: G01S 7/48, G01S 7/487, G01S 17/931, G01S 17/42

(54) **VERFAHREN UND VORRICHTUNG ZUR BESTIMMUNG VON FALSCH-POSITIVEN ERKENNUNGEN EINES LIDARSENSORS**
METHOD AND DEVICE FOR DETERMINING FALSE-POSITIVE DETECTIONS OF A LIDAR SENSOR
PROCÉDÉ ET DISPOSITIF DE DÉTERMINATION DE DÉTECTIONS DE FAUX POSITIFS D'UN CAPTEUR LIDAR

(30) Priorität: 21.09.2020 DE 102020005755
(43) Veröffentlichungstag der Anmeldung: 26.07.2023
(73) Patentinhaber: Mercedes-Benz Group AG, 70372 Stuttgart (DE)
(72) Erfinder: PETER, David, 70195 Stuttgart (DE)
(74) Vertreter: Novagraaf Group
(86) Internationale Anmeldenummer: PCT/EP2021/070888
(87) Internationale Veröffentlichungsnummer: WO 2022/058076

(56) Entgegenhaltungen:
- EP-A1- 3 121 620
- KOCH RAINER ET AL: "Effective distinction of transparent and specular reflective objects in point clouds of a multi-echo laser scanner", 2017 18TH INTERNATIONAL CONFERENCE ON ADVANCED ROBOTICS (ICAR), IEEE, 10 July 2017 (2017-07-10), pages 566 - 571, XP033147149, DOI: 10.1109/ICAR.2017.8023667

## Beschreibung

Die Erfindung betrifft ein Verfahren zur Bestimmung von falsch-positiven Erkennungen eines Lidarsensors bei einem Scanvorgang einer Fahrzeugumgebung.

Die Erfindung betrifft weiterhin eine Vorrichtung zur Bestimmung von falsch-positiven Erkennungen eines Lidarsensors bei einem Scanvorgang einer Fahrzeugumgebung.

Aus der DE 199 47 593 A1 ist ein Radargerät für ein Fahrzeug, welches an einem Fahrzeug zu befestigen ist, bekannt. Das Radargerät weist eine Radarstrahlabtasteinrichtung zur Abtastung eines Abtastbereichs mit einem Radarstrahl parallel zu einer Fahrbahnoberfläche, auf der das Fahrzeug fährt, auf. Weiterhin weist das Radargerät eine Objekterfassungseinrichtung zum Empfangen reflektierter Wellen des Radarstrahls zum Erstellen eines erfassten Objektbildes, beruhend auf den reflektierten Wellen, auf, wobei die Objekterfassungseinrichtung eine Geisterechobestimmungseinrichtung zur Bestimmung, ob ein erstelltes erfasstes Objektbild ein Geisterecho ist, umfasst.

Aus der EP 3 121 620 A1 ist ein Verfahren zur Segmentierung einer 3D-Messpunktewolke, die mit einem Lasersensor in Anwesenheit einer beim Landen eines Hubschraubers entstehenden Aerosol-Wolke aufgenommen worden ist, bekannt. Dabei ist vorgesehen, dass die 3D-Messpunktewolke basierend auf einer lokalen Messpunktdichte geclustert werden, dass zeitliche Veränderungen von Position, Orientierung und Form der gebildeten Cluster ermittelt werden und dass anhand der ermittelten Veränderungen die Zugehörigkeit eines Clusters zu der Aerosol-Wolke erkannt wird.

Aus der Druckschrift KOCH, R., MAY, S., NÜCHTER, A.: "Effective distinction of transparent and specular reflective objects in point clouds of a multi-echo laser scanner", 18th International Conference on Advanced Robotics (ICAR), 2017. S. 566-571, ISBN 978-1-5386-3158-4, ist ein Verfahren zum Erkennen von transparenten und spiegelnden Objekten in einer Punktewolke eines Laser-Scanners bekannt. Bei diesem Verfahren werden durch eine Abstandsauswertung der Punkte in der Punktewolke Diskontinuitäten in den Abstandswerten identifiziert und beim Auffinden von Diskontinuitäten werden die entsprechenden Punkte zum Auffinden von flachen quadratischen Oberflächen herangezogen. Die ermittelten flachen Oberflächen und die Intensitäten der Reflexionen werden verwendet, um zwischen transparenten und spiegelnden Oberflächen zu unterscheiden.

Der Erfindung liegt die Aufgabe zu Grunde, ein neuartiges Verfahren und eine neuartige Vorrichtung zur Bestimmung von falsch-positiven Erkennungen eines Lidarsensors anzugeben.

Die Aufgabe wird erfindungsgemäß gelöst durch ein Verfahren, welches die im Anspruch 1 angegeben Merkmale aufweist, und durch eine Vorrichtung, welche die im Anspruch 6 angegebenen Merkmale aufweist.

Vorteilhafte Ausgestaltungen der Erfindung sind Gegenstand der Unteransprüche.

In einem Verfahren zur Auswertung von Reflexionen von Lidarpulsen eines Lidarsensors, bei dem die Lidarpulse von dem Lidarsensor bei einem Scanvorgang einer Umgebung in unterschiedliche Richtungen eines Scanbereichs des Lidarsensors gesendet werden und Reflexionen der Lidarpulse vom Lidarsensor detektiert werden und bei dem durch Clusterung der Reflexionen Cluster erzeugt werden, ist erfindungsgemäß vorgesehen,
- dass die Umgebung eine Fahrzeugumgebung ist,
- dass für jeden Laserpuls, welcher in dem Scanbereich des Lidarsensors zu diesem zurückreflektiert wird, geprüft wird, ob dieser mehrfach in unterschiedlichen Abständen zurückreflektiert wird,
- dass für die mehrfach zurückreflektierten Laserpulse die jeweils zuerst empfangenen Reflexionen als jeweils erste Reflexionen ermittelt werden,
- dass die Clusterung anhand der ersten Reflexionen durchgeführt wird,
- und dass dann, wenn eine Abstandsauswertung von Reflexionen aus einem erzeugten Cluster ergibt, dass die Laserpulse dort an einer zumindest näherungsweise homogen ausgebildeten reflektierenden Oberfläche reflektiert werden, der jeweiligen ersten Reflexion folgende weitere Reflexionen als falsch-positive Erkennungen markiert werden.

Mittels des Verfahrens ist in zuverlässiger Weise eine Bestimmung von falsch-positiven Erkennungen, auch als Geisterziele oder Geisterecho bezeichnet, eines Lidars bei einem Scanvorgang einer Fahrzeugumgebung realisierbar. Somit ist es möglich, schwerwiegende Einschränkungen eines Lidars in realen Verkehrsszenen zu vermeiden, welche aus reflektierenden Materialien, wie beispielsweise Fensterscheiben anderer Fahrzeuge, resultieren. Somit kann eine Zuverlässigkeit eines Betriebs von Fahrerassistenzsystemen, insbesondere auch von automatisiert, insbesondere hochautomatisiert oder autonom fahrenden Fahrzeugen erhöht werden.

In einer weiteren möglichen Ausgestaltung des Verfahrens wird eine Hauptkomponentenanalyse zur Ermittlung einer Oberfläche der Cluster durchgeführt, wobei zwischen Clustern mit planarer, das heißt ebener Oberfläche, Clustern mit gebogener Oberfläche, Clustern, welche sich in genau eine Raumrichtung erstrecken, und Clustern, welche sich in drei Raumrichtungen erstrecken, unterschieden wird. Anhand dieser Unterscheidung ist eine Einteilung der Cluster in der Art möglich, dass in einfacher Weise bereits anhand der Einteilung entschieden werden kann, ob in diesem Cluster das Vorliegen einer falsch-positiven Erkennung möglich ist.

In einer weiteren möglichen Ausgestaltung des Verfahrens werden ausschließlich Cluster mit planarer Oberfläche und Cluster mit leicht gebogener Oberfläche, deren Biegung der Biegung einer Fensterscheibe eines Fahrzeugs entspricht, als näherungsweise homogen ausgebildete reflektierende Oberfläche gekennzeichnet.

In einer weiteren möglichen Ausgestaltung des Verfahrens werden Cluster, welche sich in genau eine Raumrichtung erstrecken, als Kanten von Objekten darstellende Cluster gekennzeichnet.

In einer weiteren möglichen Ausgestaltung des Verfahrens werden Cluster, welche sich in drei Raumrichtungen erstrecken, als Staub und/oder Nebel und/oder feinkörnige Strukturen darstellende Cluster gekennzeichnet.

Eine erfindungsgemäße Vorrichtung zur Auswertung von Reflexionen von Lidarpulsen weist einen Lidarsensor und eine Auswerteeinheit auf, wobei der Lidarsensor eingerichtet ist, die Laserpulse bei einem Scanvorgang einer Fahrzeugumgebung in unterschiedliche Richtungen eines Scanbereichs des Lidarsensors zu senden und Reflexionen der Lidarpulse zu detektieren, und wobei die Auswerteeinheit ausgebildet ist
- durch Clusterung der Reflexionen Cluster zu erzeugen,
- für jeden Laserpuls, welcher in dem Scanbereich des Lidarsensors zu diesem zurückreflektiert wird, zu prüfen, ob dieser mehrfach in unterschiedlichen Abständen zurückreflektiert wird,
- für die mehrfach zurückreflektierten Laserpulse die jeweils zuerst empfangenen Reflexionen als jeweils erste Reflexionen zu ermitteln,
- die Clusterung anhand der ersten Reflexionen durchzuführen und
- dann, wenn eine Abstandsauswertung von Reflexionen aus dem erzeugten Cluster ergibt, dass die Laserpulse dort an einer zumindest näherungsweise homogen ausgebildeten reflektierenden Oberfläche reflektiert werden, der jeweiligen ersten Reflexion folgende weitere Reflexionen als falsch-positive Erkennungen zu markieren.

Die Vorrichtung ermöglicht in zuverlässiger Weise eine Bestimmung von falsch-positiven Erkennungen eines Lidarsensors bei einem Scanvorgang einer Fahrzeugumgebung. Somit ist es möglich, schwerwiegende Einschränkungen eines Lidarsensors in realen Verkehrsszenen zu vermeiden, welche aus reflektierenden Materialien, wie beispielsweise Fensterscheiben anderer Fahrzeuge, resultieren. Somit kann eine Zuverlässigkeit eines Betriebs von Fahrerassistenzsystemen, insbesondere auch von automatisiert, insbesondere hochautomatisiert oder autonom fahrenden Fahrzeugen erhöht werden.

Ausführungsbeispiele der Erfindung werden im Folgenden anhand von Zeichnungen näher erläutert.

Dabei zeigen:
- Fig. 1: schematisch einen Lidarsensor, ein Objekt und einen Verlauf von Laserstrahlung bei einer diffusen Reflexion an dem Objekt,
- Fig. 2: schematisch einen Lidarsensor, zwei Objekte und einen Verlauf von Laserstrahlung bei einer spiegelähnlichen Reflexion an einem der Objekte und einer diffusen Reflexion an dem anderen Objekt,
- Fig. 3: schematisch einen Lidarsensor, zwei Objekte und ein Geisterobjekt sowie einen Verlauf von Laserstrahlung,
- Fig. 4: schematisch ein Verkehrsszenario,
- Fig. 5: schematisch einen Lidarsensor, zwei Objekte und einen Verlauf von reflektierten Laserpulsen,
- Fig. 6: schematisch einen Lidarsensor, ein Objekt und einen Verlauf von reflektierten Laserpulsen bei Staub oder Nebel zwischen dem Lidarsensor und dem Objekt,
- Fig. 7: schematisch einen Lidarsensor, ein teilweise transmissives Objekt, zwei nicht transmissive Objekte und einen Verlauf von reflektierten Laserpulsen,
- Fig. 8: schematisch einen Lidarsensor, ein teilweise transmissives Objekt, drei nicht transmissive Objekte und einen Verlauf von reflektierten Laserpulsen,
- Fig. 9: schematisch einen Lidarsensor, zwei Objekte und einen Verlauf von reflektierten Laserpulsen,
- Fig. 10: schematisch einen Lidarsensor, zwei Objekte, ein durch Staub und/oder Nebel gebildetes weiteres Objekt und einen Verlauf von reflektierten Laserpulsen und
- Fig. 11: schematisch einen Lidarsensor, ein teilweise transmissives Objekt, zwei nicht transmissive Objekte und einen Verlauf von reflektierten Laserpulsen.

Einander entsprechende Teile sind in allen Figuren mit den gleichen Bezugszeichen versehen.

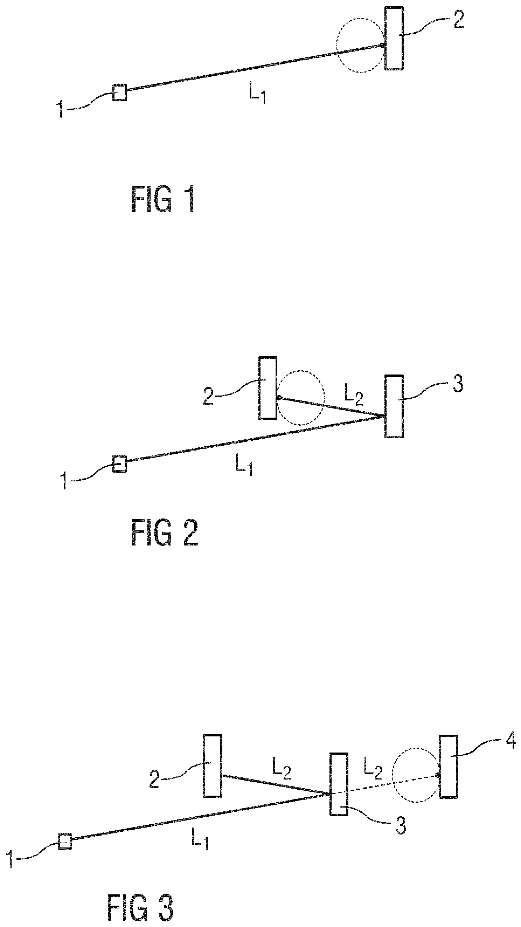

In Figur 1 sind ein Lidarsensor 1, ein Objekt 2 und ein Verlauf von Laserstrahlung L₁, L₂ bei einer diffusen Reflexion an dem Objekt 2 dargestellt.

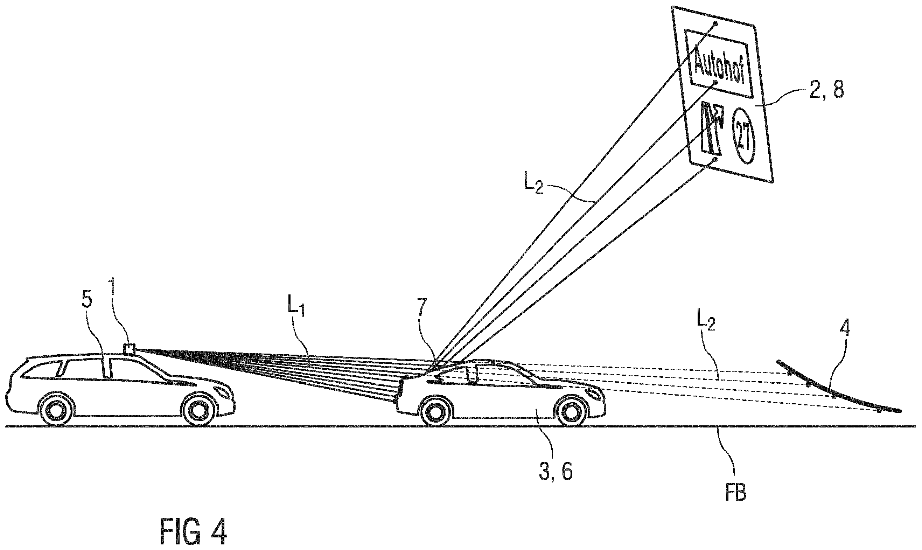

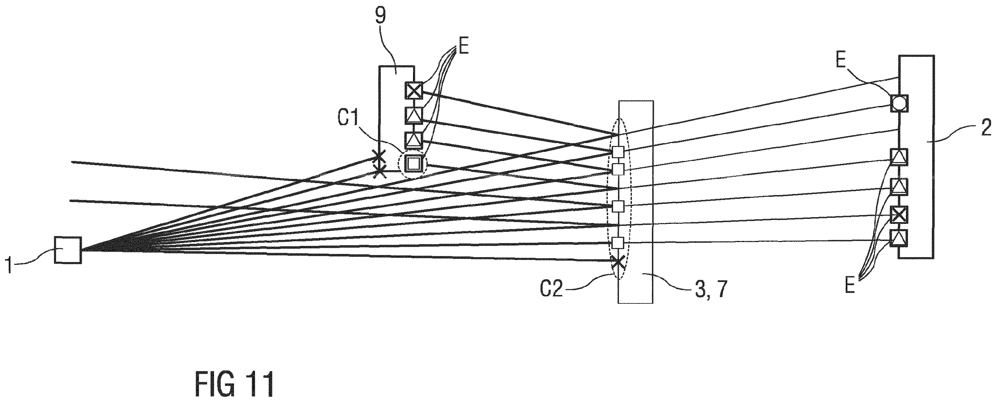

Lidarsensoren 1 sind für in Figur 4 näher dargestellte Fahrzeuge 5 und deren Fahrerassistenzsysteme, beispielsweise für automatisiert, insbesondere hochautomatisiert oder autonom fahrende Fahrzeuge 5, sehr wichtig zu einer Erfassung einer Fahrzeugumgebung, da mittels Lidarsensoren 1 ein präzises dreidimensionales Verständnis einer das Fahrzeug 5 umgebenden Verkehrsszene möglich ist. Um in einem solchen sicherheitskritischen Szenario eingesetzt zu werden, ist es jedoch entscheidend, in Figur 11 dargestellte falsch-positive Erkennungen bzw. falsch-positive Abstandsmessungen der Lidarsensoren zu bestimmen. Eine Nicht-Erfassung solcher falsch-positiver Erkennungen kann zu gefährlichen automatischen Eingriffen in eine Längs- und/oder Querführung des Fahrzeugs 5 führen, woraus gefährliche Situationen, beispielsweise ungerechtfertigte Notbremsungen, resultieren können.

Lidarsensoren 1 zeichnen sich im Allgemeinen durch sehr kleine falsch-positive Raten, das heißt niedrige Rauschpegel, aus. Bei den meisten Zielmaterialien wird die einfallende Laserstrahlung L₁, L₂ diffus reflektiert, d. h. in alle möglichen Richtungen. Dies bedeutet, dass ein Teil des Lichts direkt in den Lidarsensor 1 zurückreflektiert wird, was eine präzise Entfernungsmessung ermöglicht.

Auf stark reflektierenden Oberflächen kann jedoch eine Spiegelreflexion dominieren. Dies ist in Figur 2 näher dargestellt, wobei Figur 2 einen Lidarsensor 1, zwei Objekte 2, 3 und einen Verlauf von Laserstrahlung L₁, L₂ bei einer spiegelähnlichen Reflexion an einem der Objekte 3 und einer diffusen Reflexion an dem anderen Objekt 2 zeigt.

Dabei wird die Laserstrahlung L₁ vom Lidarsensor 1 weggelenkt, wo diese als Laserstrahlung L₂ möglicherweise auf andere nicht spiegelnd reflektierende Oberflächen, wie beispielsweise das Objekt 2 treffen kann. Dabei misst der Lidarsensor 1 nicht einen Abstand der Laserstrahlung L₁ zur Oberfläche des Objekts 3, sondern eine Gesamtlänge eines Zick-Zack-Pfades beider Laserstrahlungen L₁, L₂.

Dem Lidarsensor 1 liegt dabei keine Information vor, die darauf hinweist, dass die Laserstrahlung L₂ umgeleitet wurde, so dass von einer Entfernungsmessung entlang einer geraden Linie ausgegangen wird. Somit ergibt sich eine falsch-positive Erkennung entlang einer anfänglichen Aussenderichtung entlang der Laserstrahlung L₁, woraus eine Erkennung eines in Figur 3 gezeigten Geisterobjekts 4 resultiert.

Dies stellt ein grundlegendes Problem dar, welche unbeachtet zu kritischen Fehlern führen kann. In realen Verkehrsszenen erscheinen stark spiegelnde reflektierende Oberflächen häufig in Form von Fensterscheiben 7 anderer Fahrzeuge 6 (dargestellt in Figur 4). Selbst wenn diese nicht perfekt spiegelnd reflektieren, lenken sie jedoch zumindest einen Teil der einfallenden Laserstrahlung L1 ab. Wenn die abgelenkte Laserstrahlung L2 dann auf ein stark reflektierendes sekundäres Objekt 2 trifft, beispielsweise ein Verkehrszeichen 8, kann ein daraus resultierender indirekter Pfad einen direkten Pfad, beispielsweise gebildet durch eine diffuse Reflexion an der Fensterscheibe eines Fahrzeugs, dominieren.

Eine solche Situation ist beispielhaft in Figur 4 dargestellt. Figur 4 zeigt dabei ein Verkehrsszenario mit einem Fahrzeug 5, welches den Lidarsensor 1 aufweist, einem vor diesem befindlichen, als weiteres Fahrzeug 6 ausgebildeten Objekt 3, einem als Verkehrszeichen 8 ausgebildeten weiteren Objekt 2 und einem Geisterobjekt 4.

Ein solches Geisterobjekt 4 erscheint dabei auf einer Fahrbahn FB vor dem Fahrzeug 5. Solche falsch-positiven Erkennungen können über längere Zeiträume konsistent sein, können jedoch auch eine ungewöhnliche Dynamik aufweisen, da eine genaue Position von einer relativen Entfernung zwischen den beiden Fahrzeugen 5, 6 und einer Entfernung zwischen einem primären und einem sekundären Ziel, beispielsweise der Fensterscheibe 7 und dem Verkehrszeichen 8, abhängt. Werden derartige Reflexionseffekte nicht erkannt, besteht die Gefahr, dass ein Fahrerassistenzsystem oder ein System zum automatisierten Fahrbetrieb des Fahrzeugs 5 auf das Geisterobjekt 4 reagiert, und einen falschen Eingriff in eine Längs- und/oder Quersteuerung des Fahrzeugs 5, beispielsweise eine Notbremsung oder ein Ausweichmanöver, einleitet.

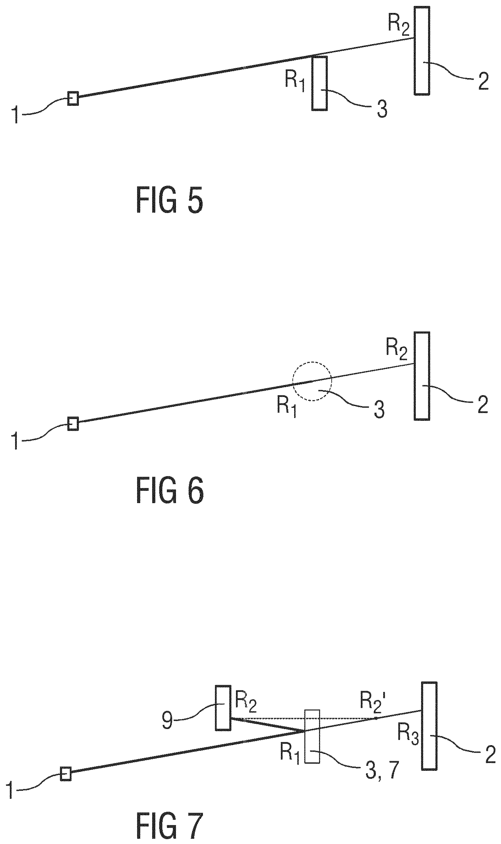

Um eine Erkennung solcher Reflexionseffekte und daraus folgend eine zuverlässige Erkennung von Geisterobjekten zu ermöglichen, ist eine Bestimmung von falsch-positiven Erkennungen eines Lidarsensors 1 bei einem Scanvorgang einer Fahrzeugumgebung vorgesehen, welche anhand der folgenden Figuren 5 bis 11 beschrieben wird.

Dabei zeigt Figur 5 einen Lidarsensor 1 und zwei Objekte 2, 3, wenn das zwischen dem Objekt 2 und dem Lidarsensor 1 befindliche Objekt 3 nur teilweise von mittels des Lidarsensors 1 ausgesendeter Laserstrahlung L₁ getroffen wird. Hierbei entstehen zwei reflektierte Laserpulse R₁, R₂.

In Figur 6 sind ein Lidarsensor 1, ein Objekt 2 und ein durch Staub und/oder Nebel zwischen dem Lidarsensor 1 und dem Objekt 2 gebildetes weiteres Objekt 3 dargestellt.

Aufgrund des Staubs und/oder Nebels entstehen ebenfalls zwei reflektierte Laserpulse R₁, R₂.

Figur 7 zeigt einen Lidarsensor 1, ein teilweise transmissives Objekt 3, beispielsweise eine Fensterscheibe 7 eines Fahrzeugs 6, zwei nicht transmissive Objekte 2, 9.

Derart teilweise transmissive Objekte 3, beispielsweise Glasfenster, können zu drei unterschiedlichen Entfernungsmessungen führen. Hierbei kann es beispielsweise zu einer direkten diffusen Reflexion von mangelhaften und möglicherweise schmutzigen Fensterscheiben 7 kommen, wie es durch den reflektierten Laserpuls R₁ dargestellt ist.

Auch kann es zu einer Spiegelreflexion auf der Glasoberfläche kommen, die zu Geister-Reflexionen führen kann, dargestellt durch die reflektierten Laserpulse R₂, R₂'. Insbesondere wird der reflektierte Laserpuls R₂ als falsch-positiver Laserpuls R₂' entlang der ursprünglichen Strahlrichtung gemeldet.

Ferner können die Transmission durch das Glas und eine diffuse Reflexion an dem als Hintergrundobjekt ausgebildeten Objekt 2 zu einem reflektierten Laserpuls R₃ führen.

In einer nicht näher dargestellten Ausgestaltung kann eine Länge des reflektierten Laserpulses R₂ auch größer sein als eine Länge des reflektierten Laserpulses R₃. Jedoch ist die direkte diffuse Reflexion, dargestellt durch den reflektierten Laserpuls R₁, immer die erste empfangene Reflexion mit der kürzesten Entfernung.

In nicht näher dargestellten Ausführungsbeispielen sind auch andere Strahlengänge möglich, beispielsweise eine Reflexion von einer Rückseite der Fensterscheibe 7 nach einem Auftreffen auf das als Hintergrundobjekt ausgebildete Objekt 2, welche jedoch höherer Ordnung und signifikant schwächer sind.

Um falsch-positive Erkennungen, wie zum Beispiel den reflektierten Laserpuls R₂', zu erkennen, ist es erforderlich, zunächst zwischen den in den Figuren 5 und 6 dargestellten Szenarien zu unterscheiden. Eine solche Unterscheidung wird dadurch erschwert, dass im in Figur 7 dargestellten Szenario nicht jeder Laserstrahl zu einer schwachen direkten Reflexion gemäß dem reflektierten Laserpuls R₁ an der Fensterscheibe 7 führt.

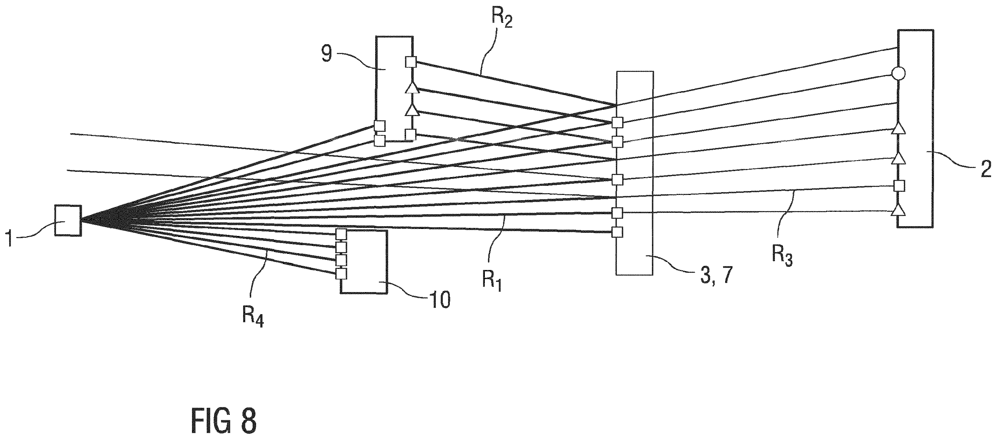

Diese Problematik zeigt Figur 8 anhand einer komplexeren Szene näher. Dabei zeigt Figur 8 einen Lidarsensor 1, ein teilweise transmissives Objekt 3, drei nicht transmissive Objekte 2, 9, 10 und einen Verlauf von reflektierten Laserpulsen R₁ bis R₄.

Eine direkte diffuse Reflexion an dem transmissiven Objekt 3, beispielsweise der Fensterscheibe 7 des Fahrzeugs 6, führt zu einer kleinen Anzahl erster Reflexionen auf einer Oberfläche des Objekts 3, wobei die ersten Reflexionen mittels Quadraten dargestellt sind.

Für einige Laserstrahlen dominiert die Spiegelreflexion am Objekt 3, für andere der durchlässige Pfad am Objekt 3, so dass Reflexionen an den Objekten 2 und 9 erzeugt werden. Hierbei erfolgt in manchen Fällen ein Durchlass der Laserstrahlen durch das Objekt 3 in der Art, dass erste Reflexionen erst an den an den Objekten 2 und 9 entstehen.

Weiterhin sind zweite Reflexionen eines Laserstrahls als Dreiecke und dritte Reflexionen als Kreis dargestellt.

Um falsch-positive Erkennungen in den Messungen zu bestimmen, ist vorgesehen, dass der vollständige mittels des Lidarsensors 1 durchgeführte Scanvorgang nach Messungen mit zweiten und möglicherweise höheren Reflexionen durchsucht wird.

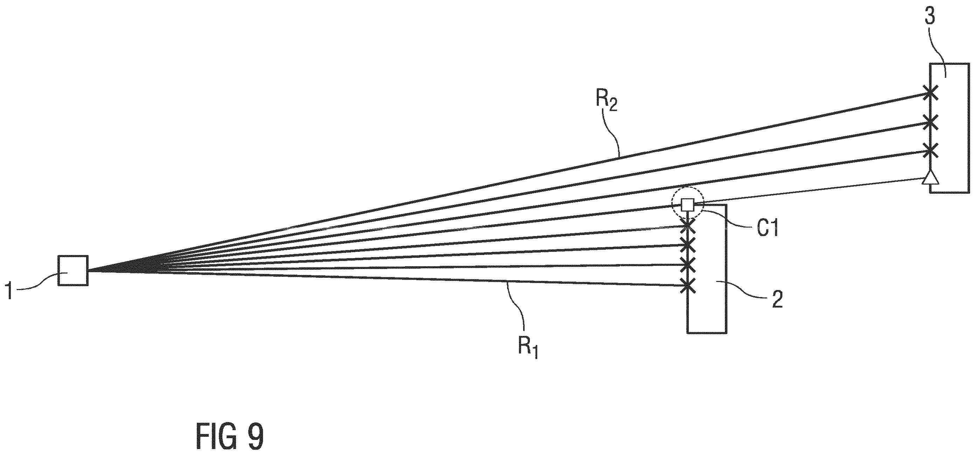

Anschließend wird einfacher euklidischer Clustering-Algorithmus für alle ersten Reflexionen, welche in den Figuren 9 bis 11 als Quadrate dargestellt sind, angewendet, um nahegelegene Punkte zusammenzuführen.

Für jeden so gebildeten erweiterten Cluster C1, C2 wird eine Hauptkomponentenanalyse durchgeführt, was zu drei sortierten Eigenwerten λ1 ≥ λ2 ≥ λ3 führt. Cluster C1, C2 sind in den Figuren 9 bis 11 näher dargestellt.

Planare Cluster C1, C2 mit λ1, λ2 » λ λ3 und Cluster C1, C2 mit leicht gebogenen Oberflächen werden als Kandidaten für reflektierende Oberflächen markiert.

Cluster C1, C2, welche sich dagegen nur in eine Richtung erstrecken (λ1 » λ2, λ3), resultieren mit hoher Wahrscheinlichkeit aus Objektkanten und werden deshalb nicht markiert. Cluster C1, C2, die sich in alle Richtungen erstrecken (λ1 ≈ λ2 ≈ λ3), resultieren mit hoher Wahrscheinlichkeit aus Nebel und/oder Staub und/oder aus sehr feinkörnigen Strukturen, beispielsweise Bäumen oder Vegetation, und werden ebenfalls nicht markiert.

Als falsch-positive Reflexionen bzw. Erkennung E werden die Messungen markiert, welche folgende zwei Bedingungen erfüllen:
1. Die Reflexion ergibt sich aus einer Messung entlang eines Laserstrahls, der durch ein von einem markierten Cluster C1, C2 aufgespanntes Volumen verläuft (dargestellt in den Figuren 9 bis 11 durch gestrichelte Umrandungen der ersten Reflexionen).
2. Ein Abstand zur Reflexion ist größer als ein Abstand zum markierten Cluster C1; das heißt die Reflexion befindet sich vom Lidarsensor aus gesehen hinter dem Cluster C1, C2.

Figur 9 zeigt einen Lidarsensor 1, zwei Objekte 2, 3 und einen Verlauf von reflektierten Laserpulsen R₁, R₂. Dabei wird an einer Kante des Objekts 2 ein Laserstrahl teilweise reflektiert, wobei der verbleibende Teil an dem weiteren Objekt reflektiert wird. Dabei stellt die Reflexion an der Kante des Objekts 2 eine erste Reflexion, die Reflexion an dem weiteren Objekt 3 eine zweite Reflexion dar. Da keine erweiterte Region mit zweiten Reflexionen vorliegt, wird nur ein Cluster C1 im Bereich der ersten Reflexion markiert. Die übrigen Reflexionen (durch Kreuze dargestellt), welchen keine weitere Reflexion folgt, werden nicht markiert.

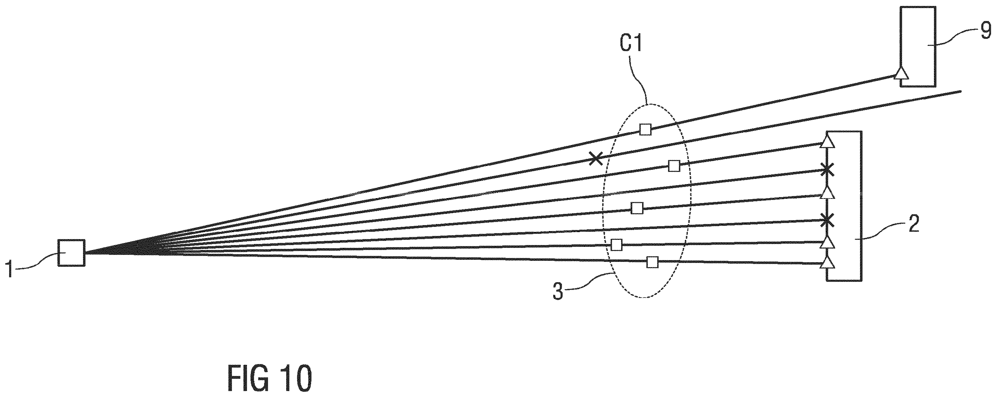

In Figur 10 sind ein Lidarsensor 1, zwei Objekte 2, 9 und ein durch Staub und/oder Nebel zwischen dem Lidarsensor 1 und den Objekten 2, 9 gebildetes weiteres Objekt 3 dargestellt. Alle Reflexionen (als Quadrate dargestellt), welchen weitere Reflexionen (als Dreiecke dargestellt) folgen, werden zu einem Cluster C1 zusammengefasst.

In Figur 11 sind ein Lidarsensor 1 und drei Objekte 2, 3 und 9 dargestellt, wobei ein Objekt 3 transmissiv, beispielsweise als Fensterscheibe 7 eines Fahrzeugs 6, ausgebildet ist. Alle Reflexionen (als Quadrate dargestellt), welchen weitere Reflexionen (als Dreiecke dargestellt) folgen, werden zu den Clustern C1, C2 zusammengefasst. Hierbei weist das Cluster C2 eine planare Oberfläche auf und wird daher markiert. Für alle Laserstrahlen, welche durch das vom Cluster C2 aufgespannte Volumen führen, werden zugehörige Reflexionen als falsch-positive Erkennungen E markiert.

## Patentansprüche

1. Verfahren zur Auswertung von Reflexionen von Lidarpulsen (R₁ bis R₄) eines Lidarsensors (1)
- wobei die Lidarpulse (R₁ bis R₄) von dem Lidarsensor (1) bei einem Scanvorgang einer Umgebung in unterschiedliche Richtungen eines Scanbereichs des Lidarsensors (1) gesendet werden und Reflexionen der Lidarpulse (R₁ bis R₄) vom Lidarsensor (1) detektiert werden,
- und wobei durch Clusterung der Reflexionen Cluster (C1, C2) erzeugt werden, **dadurch gekennzeichnet, dass**
- die Umgebung eine Fahrzeugumgebung ist,
- für jeden Laserpuls (R₁ bis R₄), welcher in dem Scanbereich des Lidarsensors (1) zu diesem zurückreflektiert wird, geprüft wird, ob dieser mehrfach in unterschiedlichen Abständen zurückreflektiert wird,
- für die mehrfach zurückreflektierten Laserpulse (R₁ bis R₄) die jeweils zuerst empfangene Reflexionen als jeweils erste Reflexionen ermittelt werden,
- die Clusterung anhand der ersten Reflexionen durchgeführt wird und
- dann, wenn eine Abstandsauswertung von Reflexionen aus einem erzeugten Cluster (C1, C2) ergibt, dass die Laserpulse (R₁ bis R₄) dort an einer zumindest näherungsweise homogen ausgebildeten reflektierenden Oberfläche reflektiert werden, der jeweiligen ersten Reflexion folgende weitere Reflexionen als falsch-positive Erkennungen (E) markiert werden.

2. Verfahren nach Anspruch 2,
**dadurch gekennzeichnet, dass**
eine Hauptkomponentenanalyse zur Ermittlung der Oberfläche der Cluster (C1, C2) durchgeführt wird, wobei zwischen
- Clustern (C1, C2) mit planarer Oberfläche,
- Clustern (C1, C2) mit gebogener Oberfläche,
- Clustern (C1, C2), welche sich in genau eine Raumrichtung erstrecken, und
- Clustern (C1, C2), welche sich in drei Raumrichtungen erstrecken, unterschieden wird.

3. Verfahren nach Anspruch 2,
**dadurch gekennzeichnet, dass**
ausschließlich Cluster (C1, B2) mit planarer Oberfläche und Cluster (C1, C2) mit leicht gebogener Oberfläche, deren Biegung der Biegung einer Fensterscheibe eines Fahrzeugs entspricht, als näherungsweise homogen ausgebildete reflektierende Oberfläche gekennzeichnet werden.

4. Verfahren nach Anspruch 2 oder 3,
**dadurch gekennzeichnet, dass**
Cluster (C1, C2), welche sich in genau eine Raumrichtung erstrecken, als Kanten von Objekten (2, 3, 9, 10) darstellende Cluster (C1, C2) gekennzeichnet werden.

5. Verfahren nach einem der Ansprüche 2 bis 4,
**dadurch gekennzeichnet, dass**
Cluster (C1, C2), welche sich in drei Raumrichtungen erstrecken, als Staub und/oder Nebel und/oder feinkörnige Strukturen darstellende Cluster (C1, C2) gekennzeichnet werden.

6. Vorrichtung zur Auswertung von Reflexionen von Lidarpulsen (R1 bis R4),
- wobei Vorrichtung einen Lidarsensor (1) aufweist, der eingerichtet ist, die Lidarpulse (R1 bis R4) bei einem Scanvorgang einer Umgebung in unterschiedliche Richtungen eines Scanbereichs des Lidarsensors (1) zu senden und Reflexionen der Laserpulse zu detektieren
- und wobei eine Auswerteeinheit vorgesehen ist, die ausgebildet ist, durch Clusterung der Reflexionen Cluster (C1, C2) zu erzeugen,
**dadurch gekennzeichnet,**
**dass** die Umgebung eine Fahrzeugumgebung ist und
**dass** die Auswerteeinheit, weiterhin ausgebildet ist
- für jeden Laserpuls (R₁ bis R₄), welcher in dem Scanbereich des Lidarsensors (1) zu diesem zurückreflektiert wird, zu prüfen, ob dieser mehrfach in unterschiedlichen Abständen zurückreflektiert wird,
- für die mehrfach zurückreflektierten Laserpulse (R₁ bis R₄) die jeweils zuerst empfangenen Reflexionen als jeweils erste Reflexionen zu ermitteln,
- die Clusterung anhand der ersten Reflexionen durchzuführen,
- dann, wenn eine Abstandsauswertung von Reflexionen aus dem erzeugten Cluster (C1, C2) ergibt, dass die Laserpulse (R₁ bis R₄) dort an einer zumindest näherungsweise homogen ausgebildeten reflektierenden Oberfläche reflektiert werden, der jeweiligen ersten Reflexion folgende weitere Reflexionen als falsch-positive Erkennungen (E) zu markieren.

## Claims

1. Method for evaluating reflections of lidar pulses (R₁ to R₄) of a lidar sensor (1)
- the lidar pulses (R₁ to R₄) being sent by the lidar sensor (1) in different directions of a scanning region of the lidar sensor (1) in the course of a scanning operation of an environment and reflections of the lidar pulses (R₁ to R₄) being detected by the lidar sensor (1),
- and clusters (C1, C2) being generated by clustering the reflections,
**characterized in that**
- the environment is a vehicle environment,
- for each laser pulse (R₁ to R₄) which is reflected back to the lidar sensor (1) in the scanning region thereof, it is checked whether it is reflected back multiple times at different distances,
- for the multiple reflected-back laser pulses (R₁ to R₄), the reflections received first in each case are determined as the first reflections in each case,
- the clustering is carried out using the first reflections and
- when a distance evaluation of reflections from a generated cluster (C1, C2) shows that the laser pulses (R₁ to R₄) are reflected there at a reflecting surface which is at least approximately homogeneous, subsequent reflections following the first reflection in each case are marked as false-positive detections (E).

2. Method according to claim 2,
**characterized in that**
a main component analysis is carried out to determine the surface of the clusters (C1, C2), a distinction being made between
- clusters (C1, C2) with a planar surface,
- clusters (C1, C2) with a curved surface,
- clusters (C1, C2) which extend in exactly one spatial direction, and
- clusters (C1, C2) which extend in three spatial directions.

3. Method according to claim 2,
**characterized in that**
only clusters (C1, B2) with a planar surface and clusters (C1, C2) with a slightly curved surface, of which the curvature corresponds to the curvature of a window panel of a vehicle, are characterized as approximately homogeneous reflective surfaces.

4. Method according to claim 2 or claim 3,
**characterized in that**
clusters (C1, C2) which extend in exactly one spatial direction are characterized as clusters (C1, C2) which represent edges of objects (2, 3, 9, 10).

5. Method according to any of claims 2 to 4,
**characterized in that**
clusters (C1, C2) which extend in three spatial directions are characterized as clusters (C1, C2) which represent dust and/or fog and/or fine-grained structures.

6. Device for evaluating reflections of lidar pulses (R1 to R4),
- the device having a lidar sensor (1) which is configured to send the lidar pulses (R1 to R4) in different directions of a scanning region of the lidar sensor (1) in the course of a scanning operation of an environment and to detect reflections of the laser pulses
- and an evaluation unit being provided which is designed to generate clusters (C1, C2) by clustering the reflections,
**characterized in that**
the environment is a vehicle environment and
the evaluation unit is further designed
- for each laser pulse (R₁ to R₄) which is reflected back to the lidar sensor (1) in the scanning region, to check whether it is reflected back multiple times at different distances,
- for the multiple reflected-back laser pulses (R₁ to R₄), to determine the reflections received first in each case as the first reflections in each case,
- to carry out the clustering using the first reflections,
- when a distance evaluation of reflections from the generated cluster (C1, C2) shows that the laser pulses (R₁ to R₄) are reflected there at a reflecting surface which is at least approximately homogeneous, to mark subsequent reflections following the first reflection in each case as false-positive detections (E).

## Revendications

1. Procédé permettant l'évaluation de réflexions d'impulsions lidar (R₁ à R₄) d'un capteur lidar (1)
- dans lequel les impulsions lidar (R₁ à R₄) sont envoyées par le capteur lidar (1) lors d'un processus de balayage d'un environnement dans différentes directions d'une zone de balayage du capteur lidar (1), et des réflexions des impulsions lidar (R₁ à R₄) sont détectées par le capteur lidar (1),
- et dans lequel des groupes (C1, C2) sont générées par regroupement des réflexions, **caractérisé en ce que**
- l'environnement est un environnement de véhicule,
- pour chaque impulsion laser (R₁ à R₄) qui est renvoyée vers le capteur lidar (1) dans la zone de balayage de celui-ci, il est vérifié si elle est renvoyée plusieurs fois à des distances différentes,
- pour les impulsions laser (R₁ à R₄) renvoyées plusieurs fois, les réflexions respectivement reçues en premier sont déterminées comme étant respectivement les premières réflexions,
- le regroupement est effectué à partir des premières réflexions, et
- lorsqu'une évaluation de distance de réflexions provenant d'un groupe (C1, C2) généré montre que les impulsions laser (R₁ à R₄) y sont réfléchies sur une surface réfléchissante réalisée de manière au moins approximativement homogène, d'autres réflexions suivant la première réflexion respective sont marquées comme reconnaissances (E) faussement positives.

2. Procédé selon la revendication 2,
**caractérisé en ce que**
une analyse en composantes principales est effectuée pour déterminer la surface des groupes (C1, C2), dans lequel une distinction est faite entre
- les groupes (C1, C2) à surface plane,
- les groupes (C1, C2) à surface incurvée,
- les groupes (C1, C2) qui s'étendent exactement dans une direction spatiale, et
- les groupes (C1, C2) qui s'étendent dans trois directions spatiales.

3. Procédé selon la revendication 2,
**caractérisé en ce que**
exclusivement des groupes (C1, B2) à surface plane et des groupes (C1, C2) à surface légèrement incurvée, dont la courbure correspond à la courbure d'une vitre de fenêtre d'un véhicule, sont caractérisés comme surface réfléchissante réalisée de manière approximativement homogène.

4. Procédé selon la revendication 2 ou 3,
**caractérisé en ce que**
des groupes (C1, C2), qui s'étendent exactement dans une direction spatiale, sont caractérisés comme des groupes (C1, C2) représentant des bords d'objets (2, 3, 9, 10).

5. Procédé selon l'une des revendications 2 à 4,
**caractérisé en ce que**
des groupes (C1, C2), qui s'étendent dans trois directions spatiales, sont caractérisés comme des groupes (C1, C2) représentant de la poussière et/ou du brouillard et/ou des structures à grains fins.

6. Dispositif permettant l'évaluation de réflexions d'impulsions lidar (R₁ à R₄),
- dans lequel le dispositif présente un capteur lidar (1) qui est configuré pour envoyer les impulsions lidar (R₁ à R₄) dans différentes directions d'une zone de balayage du capteur lidar (1) lors d'un processus de balayage d'un environnement, et pour détecter des réflexions des impulsions laser
- et dans lequel une unité d'évaluation est prévue, laquelle est réalisée pour générer des groupes (C1, C2) par regroupement des réflexions,
**caractérisé en ce**
**que** l'environnement est un environnement de véhicule et
**que** l'unité d'évaluation est en outre réalisée pour
- vérifier, pour chaque impulsion laser (R₁ à R₄) qui est renvoyée vers le capteur lidar (1) dans la zone de balayage de celui-ci, si l'impulsion laser est renvoyée plusieurs fois à des distances différentes,
- déterminer, pour ce qui est des impulsions laser (R₁ à R₄) renvoyées plusieurs fois, les réflexions respectivement reçues en premier comme étant respectivement des premières réflexions,
- effectuer le regroupement à partir des premières réflexions,
- marquer d'autres réflexions suivant la première réflexion respective comme reconnaissances (E) faussement positives lorsqu'une évaluation de distance de réflexions provenant du groupe (C1, C2) généré montre que les impulsions laser (R₁ à R₄) y sont réfléchies sur une surface réfléchissante réalisée de manière au moins approximativement homogène.
